## Europäisches Patentamt
## European Patent Office
## Office européen des brevets

(19)

(11) Publication number: **0 109 219**
A2

## EUROPEAN PATENT APPLICATION

(12)

(21) Application number: 83306528.7

(22) Date of filing: 27.10.83

(51) Int. Cl.³: **F 02 K 1/62**

(30) Priority: 12.11.82 GB 8232366

(43) Date of publication of application: 23.05.84
Bulletin 84/21

(84) Designated Contracting States: DE FR GB IT

(71) Applicant: LUCAS INDUSTRIES public limited company,
Great King Street, Birmingham, B19 2XF (GB)

(72) Inventor: Lindop, Roy, 52 Kermoor Avenue Sharples,
Bolton Lancs (GB)
Inventor: Ormerod, Alan, Brooklawn High Street,
Oswaldtwistle Lancs (GB)
Inventor: Bridges, William, 49 Woone Lane, Clitheroe
Lancs (GB)

(74) Representative: Cuddon, George Desmond et al, Marks
& Clerk Alpha Tower Suffolk Street Queensway,
Birmingham B1 1TT (GB)

(54) Thrust reversing apparatus for a gas turbine engine.

(57) A thrust reversing apparatus is arranged to divert gas flow
through a cascade outlet (22) from a duct (13) defined between
an engine centre body (10) and an engine cowling portion (15).
The cowling portion (15) is movable to a rearward position (16) by
an actuator (25, 26, 28) and doors (23) which are secured by
hinges (40, 41) to the cowling portions (15) and to an output
element (28) of the actuator are coupled by links (24) so as to
move to positions (23A) which shut the duct (13) downstream of
the outlet (22) as the latter is uncovered. Thrust from the actuator
(25, 26, 28) is applied directly to both the cowling portion (15) and
to the hinges (40, 41) of the doors (23).

## THRUST REVERSING APPARATUS
## FOR A GAS TURBINE ENGINE.

This invention relates to apparatus for reversing the thrust of gas turbine engines which are mounted on an aircraft, to assist in decelerating the aircraft after landing. It is known, for example from US Patent 4177639, to provide cascade outlets from an exhaust duct of the engine and to move a portion of the engine cowling rearwardly to uncover the cascade outlets and at the same time to move blocking flaps into the duct downstream of the cascade outlets. In order to obtain thrust reversal the cowling portion is required to be translated rearwardly by a considerable distance, typically in the order of 500 mm. Actuators for this movement must be mounted in a part of the engine cowling which is not required to be translated, and space in this part of the cowling is frequently limited. Moreover, during movement of the translatable cowling portion to a thrust reversing position, considerable forces may act on the closure flaps for the exhaust duct. If these forces are transmitted from the actuator through the translatable cowling portion, the latter will require considerable reinforcement if unacceptable stresses are to be avoided. This reinforcement imposes a weight penalty which itself is unacceptable in an aircraft engine.

It is an object of the invention to provide a thrust reversing apparatus in which the foregoing disadvantages are overcome.

According to the invention there is provided a thrust reversing apparatus for a gas turbine engine having an outer cowling portion which defines, in conjunction with a centre body, an exhaust duct, said apparatus

2

comprising a cascade outlet for said duct, actuating means for moving said cowling portion rearwardly of a relatively fixed part of the engine to uncover said cascade outlet, a plurality of flaps for shutting off said duct downstream of said cascade outlet, hinge means for mounting said flaps on said cowling portion, and linking means interconnecting said flaps and a part of said engine which is secured against said rearward movement, for causing said flaps to move to shutting positions in said duct as a result of rearward movement of said cowling portion, said actuating means and said hinge means being secured to said cowling portion at closely spaced locations thereon.

One embodiment of the invention will now be described by way of example only and with reference to the accompanying drawings in which:-

Figure 1 shows, diagrammatically, a ducted fan gas turbine engine,

Figure 2 is a section, to an enlarged scale, on line 2-2 in Figure 1,

Figure 3 is a diagrammatic section to a still larger scale, on line 3-3 in Figure 2,

Figure 4 shows, to a still larger scale, a detail of Figure 3,

Figure 5 is a section on line 5-5 in Figure 4,

Figure 6 is a detail of a pivotal and slidable mounting for parts of the engine,

Figure 7 shows the parts of Figure 6 in an opened position, and

Figure 8 is a part-section through an alternative form of actuator for a thrust reversing apparatus.

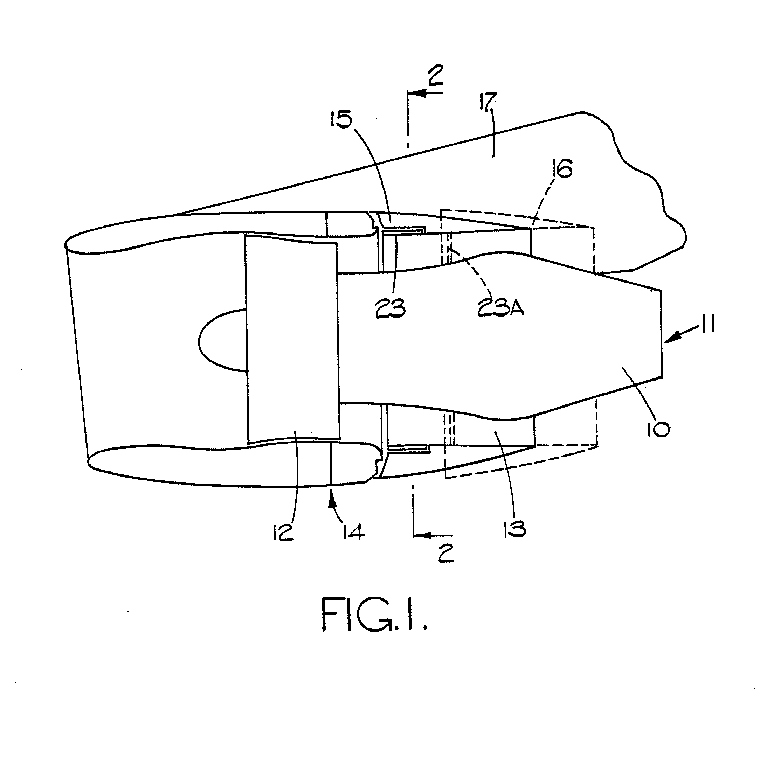

Figures 1 to 7 should be read in conjunction and corresponding parts have been allocated identical reference numbers in these figures.

As shown in Figure 1 a gas turbine engine comprises a centre body 10 from whose rear nozzle 11 a gaseous effluent is discharged and which includes a fan 12 which is driven by a shaft within the centre body 10 and which delivers air to an annular duct 13 defined between the centre body 10 and a surrounding cowling 14. A portion 15 of the cowling is movable rearwardly to a position indicated at 16, to uncover a plurality of cascade outlets (not shown in Figure 1) which communicates with the duct 13, and simultaneously to move a plurality of door flaps 23 to positions indicated at 23A, in which positions the duct 13 is shut off downstream of the aforesaid cascade outlets, so that all flow within the duct 13 is directed outwardly and forwardly through the cascade outlets, to obtain reverse thrust. The centre body 10 is provided with spoilers (not shown) which are actuated with the thrust reversing apparatus for the duct 13, and prevent the hot stream thrust from the centre body 10 from cancelling out reverse thrust provided by air from the duct 13. The centre body spoilers form no part of the present invention and are known devices which will not be described in detail herein. The engine is mounted under the wing of an aircraft by means of a pylon 17.

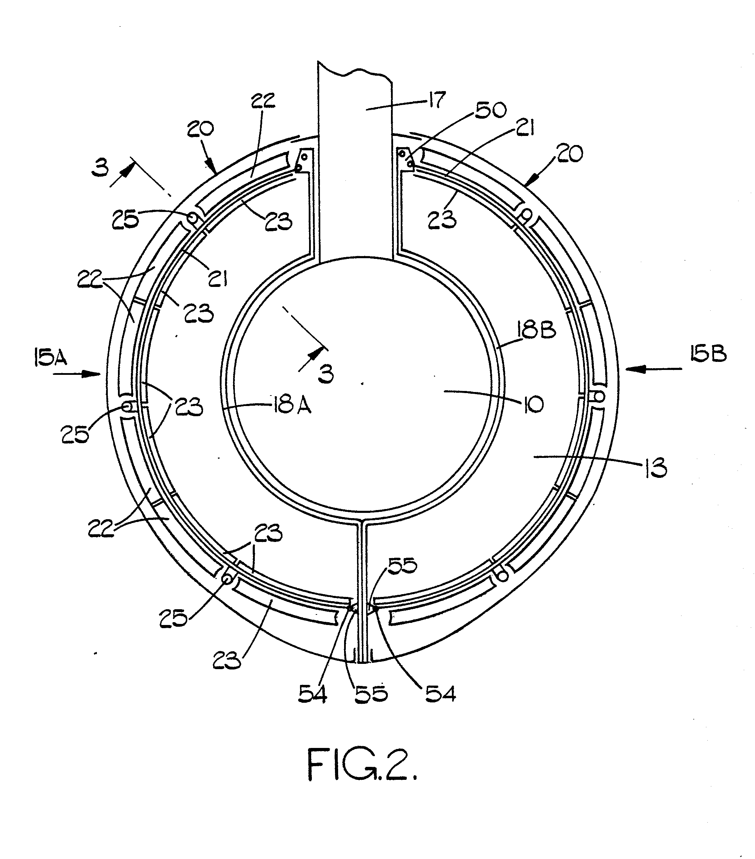

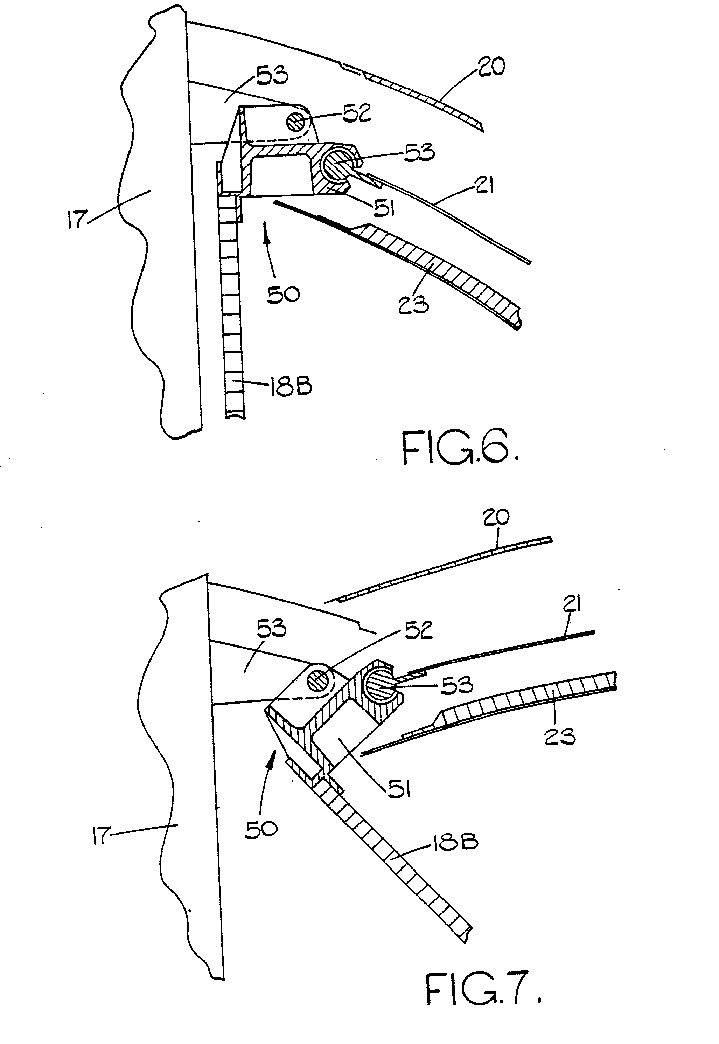

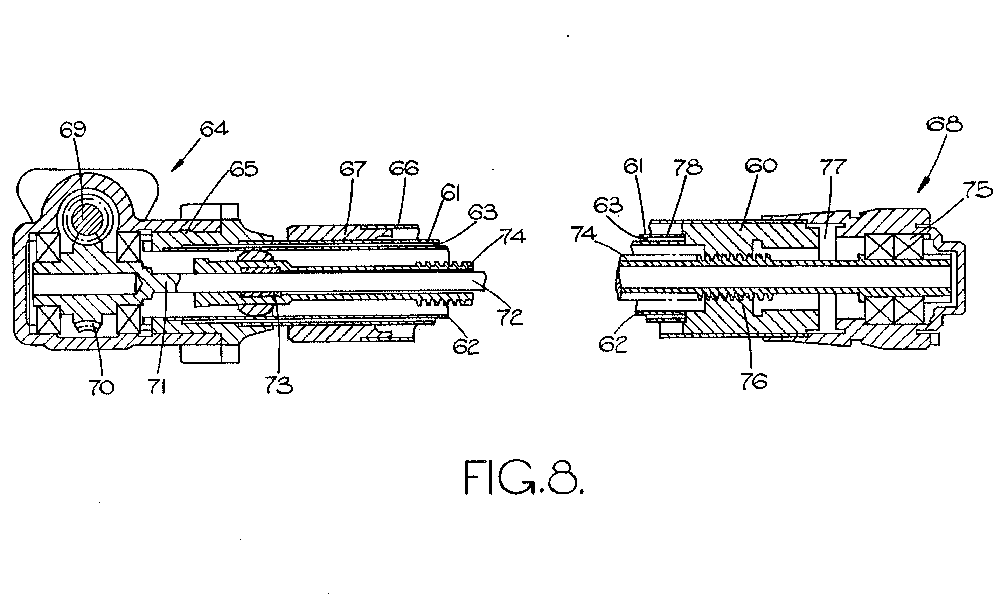

As shown in Figure 2, the centre body 10 is mounted on the pylon 17 and includes a casing which is in two parts 18A, 18B of opposite hand, these parts being pivotally mounted on the pylon 17 in a manner to be described in detail with reference to Figures 6 and 7. The translatable cowling portion 15 is also in two halves 15A, 15B of opposite hand.

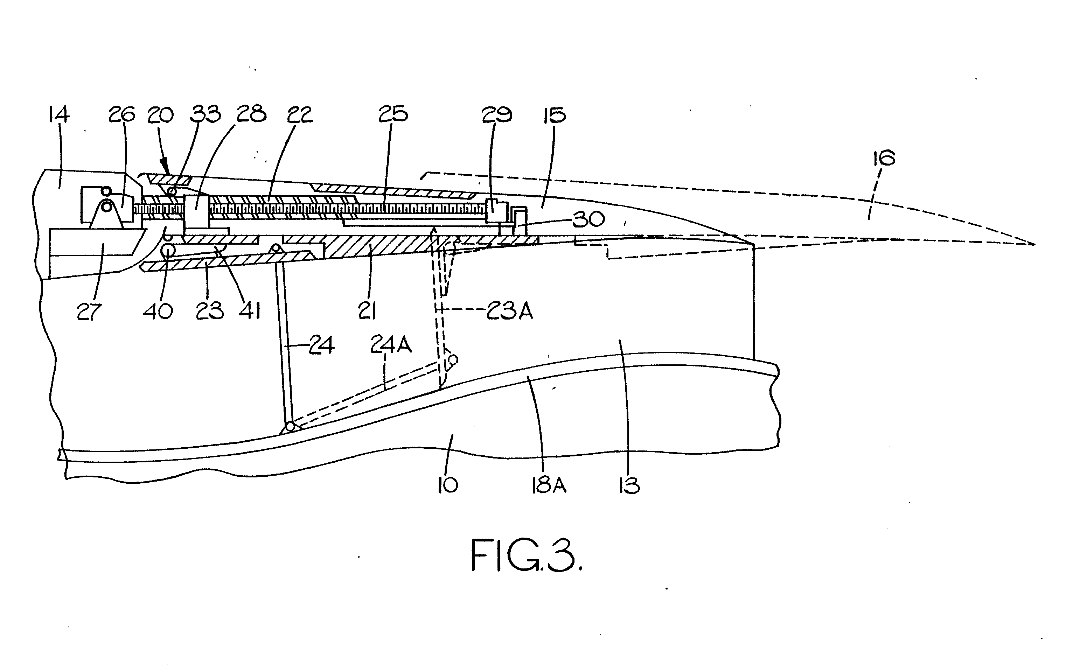

One half only of the cowling 14, its translatable portion 15, an actuator arrangement for the portion 15 and the centre body casing 18 will now be described in detail, it being understood that the other half corresponds and is of opposite hand. The cowling part 15A comprises an outer member 20 and an inner member 21, the members 20, 21 being secured together and being mounted in a manner to be described with reference to Figures 6 and 7 for sliding and pivotal movement relative to the pylon 17 and centre body 10. A plurality of cascade outlets 22 are mounted on a non-translatable part of the cowling 14, and in the forward position of the cowling portion 15 the outlets 22 lie between the inner and outer members 20, 21 and are thereby shut off from the duct 13. In the rearward position 16 of the cowling portion 15, the outlets 22 are open to the duct 13. Generally trapezoidal door flaps 23 are hingedly mounted on the inner member 21 of the portion 15 and are pivotally connected to the centre body 10 through a link 24 so that rearward movement of the cowling portion 15 to the position 16 is accompanied by movement of the flap 23 and link 24 to the positions shown in Figure 3 at 23A, 24A, in which positions the flaps 23 block off the duct 13 downstream of the cascade outlet 22.

Rearward movement of each half of the cowling portion 15 is effected by three lead screws 25 which pass between the cascade outlets 22. Each lead screw 25 is rotated by a worm and wheel gearbox 26 which is mounted on a box section 27. The section 27 is not rearwardly translatable but is pivotally mounted on the pylon 17 for movement with the cowling portion 15 when the latter is pivoted upwardly to an open position. The gearboxes 26 are connected to a common drive input so that each lead screw 25 rotates at the same speed. A ball nut 28 engages each lead screw 25 and is coupled to both the inner and outer members 20, 21 of the cowling portion 15. The end of each lead screw 25 remote from its gearbox 26 is supported in a thrust bearing 29 which is mounted on a semi-circular element 30 which is pivotally supported at its upper end on the pylon 17.

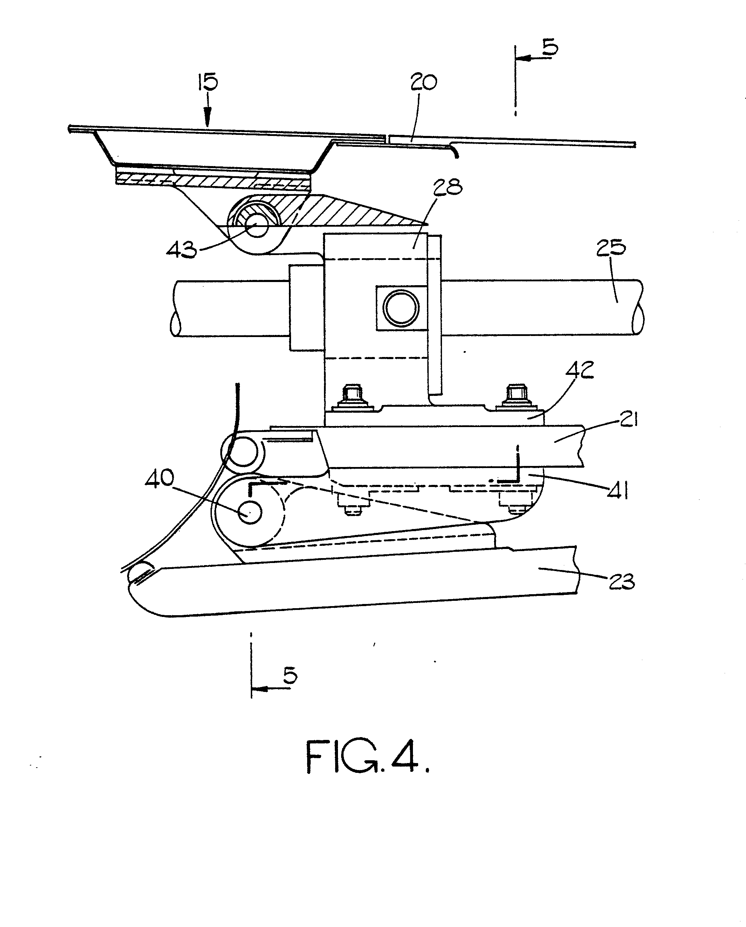

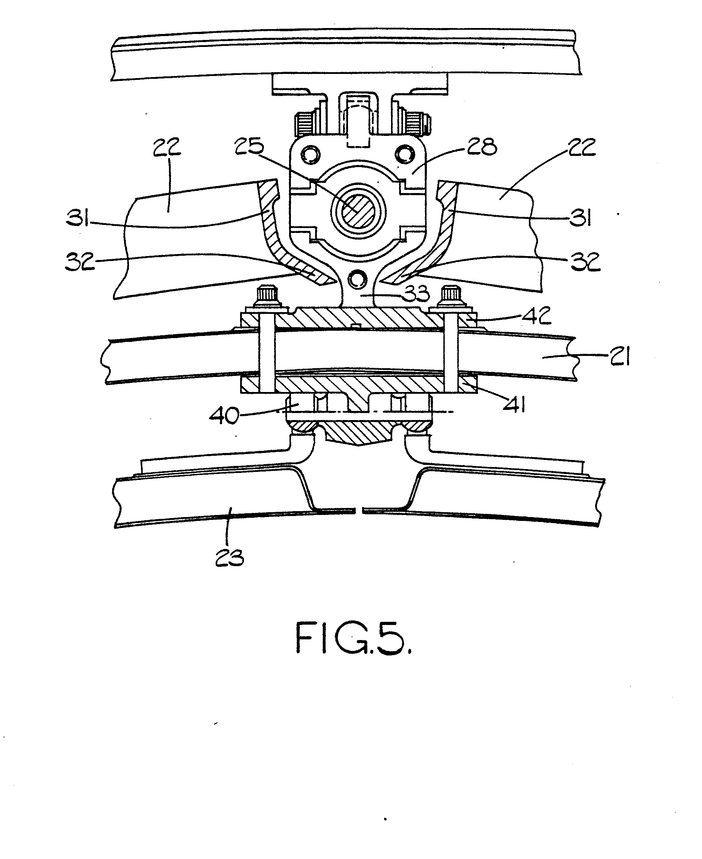

As shown in Figures 4 and 5, a hinge 40 for the door flap 23 has an element 41 which is bolted to the inside of the inner member 21 of the cowling portion 15. The ball nut 28 has an integral flange 42 which is aligned with the element 41 and is secured to the outside of the member 21 by bolts which pass through the flange 42, member 21 and element 41. The portion of the member 21 through which the bolts pass is of honeycomb section and therefore has considerable rigidity. Thrust from the ball nut 28 is thereby transmitted directly to the hinge 40 and substantially no compressive stress is applied to any part of the cowling portion 15 as a result of deployment of the flap 23 to its closed position.

As shown in Figure 5 the cascade outlets 22 have side portions 31 which extend longitudinally of the engine and have edges 32 which lie closely adjacent a part 33 of reduced thickness which connects the flange 41 to the remainder of the ball nut 28. The edges 32 have

0109219

sharp corners which provide a relatively narrow opening within which the part 33 moves. The configuration of the edges 32 is such that the orifice therebetween inhibits escape of air between the outlets 22.

The ball nut 28 is secured to the outer member 20 through a pivot 43, so that any slight tolerances between the outer and inner members 20, 21 can be accommodated. The relative radial and circumferential position between the members 20, 21 is nevertheless maintained. Since the only translating portion of the actuating device 25, 26, 29, is the ball nut 28, the only portion of the actuating device required to be accommodated by the non-translating part of the cowling 14 is the gearbox 26.

It is required that the cowling portions 15A, 15B, the casing parts 18A, 18B of the centre body 10 and at least some of the non-translatable portions of the cowling 14 can be pivoted upwardly to provide access to the inside of the centre body 10. Additionally as previously described, the parts 15A, 15B are required to be slidably mounted for rearward translation. A hinge and bearing device, indicated at 50 in Figure 2, is shown to an enlarged scale in Figures 6 and 7. A rigid beam 51 extends from the vicinity of the box section 27 (Figure 3) to a location well aft of the supporting element 30. The beam 51 is supported on pivots 52 which engage a plurality of brackets 53 secured at intervals along the pylon 17. The casing part 18B is secured directly to the beam 51, as is the upper end of the box section 27. The inner member 21 of the cowling portion 15 is provided with cylindrical sliders 53 at its upper end, the sliders 53 running in anti-friction bearings in the beam 51. The lower end of the inner member 21 is also provided with sliders 54 (Figure 2) which run in anti-friction bearings on a beam 55 which is similar to the beam 51 and which is movable with the inner body casing part 18B. Since, as previously described, the relative radial, axial and circumferential positions between the members 20, 21 are maintained by the ball nuts 27, it is not necessary that the outer member 20 should be provided with its own sliding bearing. Additionally the door flaps 23 are securely pivoted to the inner member 21 so as to be translatable therewith. As shown in Figure 7, the parts 20, 21, 23 of the cowling portion 15 and the centre body casing part 18B can be moved in unison about the pivots 52 to provide access to the centre body 10. At the same time, the box section 27 (Figure 3) moves about the pivots 52, whereby the actuator devices 25, 26, 28 move with the cowling portions 15.

Figure 8 is a part-section of a hydraulic actuator which may be substituted for the screw actuator previously described. The hydraulic actuator comprises a piston having a head 60 and a rod which comprises two spaced cylindrical walls 61, 62 which define an annular passage 63. The walls 61, 62 are sealingly secured to a fixed housing, indicated generally at 64. An annular port 65 in the housing 64 communicates with the passage 63. A cylinder surrounds the piston and includes a wall 66, a sealing element 67 slidably engaging the wall 61 and an end-cap assembly 68. An inter-engaged worm 69 and wheel 70 are mounted in the housing 64 and a shaft 71 having a portion 72 of square section is pinned to the wheel 70. A square-section sleeve 73 transmits rotation of the shaft 71 to an externally threaded tube 74. The end of the tube 74 remote from the sleeve 73 is supported in the end cap assembly 68 by double annular contact bearings 75. A nut 76 threadedly engages the tube 74 and is secured to the piston head 60. Three actuators as described are provided for each half 15A, 15B of ·the moving cowling portion 15 (Fig. 2) the actuators being located in positions corresponding to the lead screws 25 described above. The worms 69 of the actuators in each group of three are interconnected by a flexible coupling so that the worms in each group rotate at the same speeds. Additionally, the flexible coupling provides a passage for pressurized hydraulic fluid which can enter the housing 64 and pass through the inside of the wall 62 of the piston rod to act on the end cap assembly 68 and urge the cylinder rightwards, as viewed in Fig. 8. Alternatively a hydraulic pressure can be applied through the annular port 65 and pass through the annular passage 63 and a port 78 in the wall 61 of the piston rod, to act on the sealing element 67 and urge the cylinder leftwardly.

Movement of the cylinder is transmitted to the nut 76 to rotate the threaded tube 74, and hence to rotate the shaft 71. The shafts 71 of all the actuators in a group of three are, however, constrained to rotate at the same speeds by virtue of the interconnection of the worms 69 of the actuators in that group. The arrangement ensures that the cylinders of all actuators in the group move in unison and do not impart stresses to the cowling portions on which they act.

The sealing element 67 is provided with means (not shown) by which it is secured to the members 20, 21 in a like manner to the ball nut 28 (Figures 3 and 4).

CLAIMS

1. A thrust reversing apparatus for a gas turbine
engine which has an outer cowling portion (15) which
defines, in conjunction with a centre body (10), an
exhaust duct (13), said apparatus comprising a cascade
outlet (22) for said duct (13), actuating devices (25,
26, 28) for moving said cowling portion (15) rearwardly
relative to said centre body (10), to uncover said
cascade outlet (22), a plurality of flaps (23) for
shutting off said duct (13) downstream of said cascade
outlet (22), hinges (40) for mounting said flaps (23)
on said cowling portion (15), and a linking arrangement
(24) interconnecting said flaps (23) and a part (18) of
said engine which is secured against said rearward
movement, for causing said flaps (23) to move to
shutting positions in said duct (13) as a result of
rearward movement of said cowling portion (15),
characterised in that said actuating devices (25, 26,
28) and said hinges (40) are secured to said cowling
portion (15) at closely spaced locations thereon.

2. An apparatus as claimed in claim 1 in which each
said actuating device comprises an element (26) which
is restrained against axial movement relative to said
engine, and an output element (28) secured to said
cowling portion (15) at a location thereon
substantially identical to that on which said hinge
(40) is mounted.

3. An apparatus as claimed in claim 2 in which said
output element (28) and said hinge (40) are secured on
opposite sides of the same zone of said cowling portion
(15).

4. An apparatus as claimed in claim 2 or claim 3 in which said cowling portion (15) comprises outer (20) and an inner (21) members, said output element (28) being secured to both said outer and inner members (20, 21).

5. An apparatus as claimed in any one of the preceding claims which includes a bearing arrangement (51, 55) which slidably engages only one (21) of said inner and outer members (20, 21) on a part (18) of the engine which is restrained against said rearward movement.

6. An apparatus as claimed in claim 5 in which said bearing arrangement comprises two bearing slides (51, 55) supported on a part (18A) of said centre body (18) adjacent respective upper and lower edges of said one member (21).

7. An apparatus as claimed in claim 6 in which said inner and outer members (20, 21) and said centre body part (18A) are mounted for movement in unison about a pivot (52) adjacent one of said bearing slides (51).

8. An apparatus as claimed in any one of the preceding claims which includes at least two of said cascade outlets (22) a movable output element (28) of said actuating device (25, 26, 28) being slidable between adjacent sides of said outlets (22).

FIG.1.

FIG.2.

0109219

FIG.3.

0109219

FIG.4.

0109219

FIG.5.

FIG.6.

FIG.7.

FIG.8.